# EUROPEAN PATENT SPECIFICATION

(11) **EP 1 925 361 B1**
(45) Date of publication and mention of the grant of the patent: **24.06.2020**
(21) Application number: 07117822.2
(22) Date of filing: 03.10.2007
(51) Int. Cl.: B01J 23/00, B01J 23/38, B01J 23/89, B01J 35/00, B01J 37/04

(54) **Catalyst for purification of exhaust gas**
Katalysator für Abgasreinigung
Catalyseur pour la purification des gaz d'échappement

(30) Priority: 05.10.2006 JP 2006274462
(43) Date of publication of application: 28.05.2008
(73) Proprietor: Nissan Motor Co., Ltd., Yokohama-shi, Kanagawa 221-0023 (JP); Renault S.A.S., 92100 Boulogne-Billancourt (FR)
(72) Inventor: Morisaka, Hideaki, Atsugi-shi Kanagawa 243-0192 (JP); Wakamatsu, Hironori, Atsugi-shi Kanagawa 243-0192 (JP); Nakamaura, Masanori, Atsugi-shi Kanagawa 243-0192 (JP); Shiratori, Kazuyuki, Atsugi-shi Kanagawa 243-0192 (JP); Yasuda, Hirofumi, Atsugi-shi Kanagawa 243-0192 (JP); Suga, Katsuo, Atsugi-shi Kanagawa 243-0192 (JP)
(74) Representative: Hoefer & Partner Patentanwälte mbB

(56) References cited:
- EP-A- 0 941 757
- EP-A- 1 839 749
- YU K M K ET AL: "Aerogel-Coated Metal Nanoparticle Colloids as Novel Entities for the Synthesis of Defined Supported Metal Catalysts" JOURNAL OF PHYSICAL CHEMISTRY. B, MATERIALS, SURFACES, INTERFACES AND BIOPHYSICAL, WASHINGTON, DC, US, vol. 107, no. 19, 15 May 2003 (2003-05-15), pages 4515-4526, XP002995258 ISSN: 1089-5647

## Description

The invention relates generally to a catalyst for purification of exhaust gas and particularly, but not exclusively, to a catalyst for efficiently removing carbon monoxide (CO), hydrocarbon (HC) and nitrogen oxide (NOₓ) contained in the exhaust gas of a vehicle.

Precious metals such as platinum (Pt), rhodium (Rh), palladium (Pd), etc., have been widely used as a catalytic active component in a tertiary catalyst for simultaneously purifying exhaust gas by removing CO, HC and NOₓ from the gas. A commonly known catalyst for purifying exhaust gas utilizes precious metals supported on an oxide support such as alumina, zirconia and titania. Such a catalyst is applied to a surface of an inner wall of a honeycomb substrate made from cordierite to purify exhaust gas introduced into the honeycomb substrate.

A promoter is added to the catalyst to enhance catalytic performance. Such a promoter may be a transition metallic oxide. The promoter contacts or is adjacent to a particle of the precious metal (a catalytic active component) and functions to enhance catalyst activity.

Recently, the temperature of exhaust gas of a vehicle has been increasing due to high torque or speeds of a gasoline engine. The honeycomb substrate containing the catalyst is disposed directly under the engine to rapidly increase its temperature to that temperature where catalysis occurs. This placement provides for exhaust purification as soon as possible after engine start-up. Because of the increase in engine operation temperature, the catalyst is required to be used at a higher temperature range. This increased temperature decreases catalyst durability. Further, the grain growth generated in a precious metal due to high temperatures deteriorates the activity of the catalyst.

Japanese Patent Laid-Open Application Nos. (Hei.) 8-131830, 2005-000829, 2005-000830 and 2003-117393 disclose exhaust purification catalysts containing promoters disposed adjacent to the precious metallic particles to restrain the atmospheric transition around the precious metallic particles.

However, as with the catalytic active component, the promoter particles will also cohere to each other in a high temperature setting, and grain growth is generated. This reduces the surface area of the promoter particle, thereby deteriorating the performance of the promoter. The grain growth of the promoter may deteriorate the durability of the catalytic active component as well.
EP 0941757 A discloses a device (catalytic converter) for purifying an exhaust gas. This device has a first catalyst for purifying a NOx of the exhaust gas. This first catalyst contains first and second powders. The first powder has a porous carrier and at least one noble metal loaded on the porous carrier. The at least one noble metal is selected from platinum, palladium and rhodium. The second powder has a first double oxide represented by the general formula (Ln1- alpha A alpha)1- beta BO delta where alpha is a number that is greater than 0 and less than 1, beta is a number that is greater than 0 and less than 1, delta is a number that is greater than 0, Ln is at least one first element selected from La, Ce, Nd and Sm, A is at least one second element selected from Mg, Ca, Sr, Ba, Na, K and Cs, and B is at least one third element selected from Fe, Co, Ni and Mn. The device is improved in capability of purifying NOx contained in an oxygen rich exhaust gas YU K.M.K. et al.: "Aerogel-Coated Metal Nanoparticle Colloids as Novel Entities for the Synthesis of Defined Supported Metal Catalysts", Journal of physical chemistry. B, Materials, Surfaces, Interfaces and Biophysical, Washington DC, US, vol. 107, no. 19, May 15, 2003, pages 4515-4526, is a study on nanometer metal particled of tailored size and composition prepared via inverse microemulsion technique.
EP 1839749 A1 discloses a catalyst which has a heat-resistant support selected from among Al₂O₃, SiO₂, ZrO₂, and TiO₂, and a first metal supported on an outer surface of the support, and included by an inclusion material containing a component of the support.

It is an aim of the invention to address this issue and to improve upon known technology. Embodiments of the invention may provide an improved catalyst for purifying exhaust gas. Other aims and advantages of the invention will become apparent from the following description, claims and drawings.

Aspects of the invention therefore provide a catalyst as claimed in the appended claims.

According to a first aspect of the invention there is provided a catalyst for purification of exhaust gas comprising a promoter clathrate having a promoter component particle covered with a high heat-resistant oxide and a catalytic active species adjacent to the promoter clathrate, wherein the promoter component particle is an oxide comprising at least one of Mn, Fe, Ni, Co, Cu and Zn; and the high heat-resistant oxide comprises ZrO₂ and one or more than one species of CeO₂, Y₂O₃, La₂O₃, CaO and Nd₂O₃; and wherein the catalytic active species comprises a first metallic oxide, catalytic active particles born on the first metallic oxide and a second porous metallic oxide; and wherein the catalytic active particle is caged within the second porous metallic oxide so that the catalytic active particle is restrained from being moved, wherein the catalytic active particles comprise at least one precious metal, wherein the precious metal comprises at least one of Pt, Pd, Rh, Au, Ag, Ir and Ru and wherein the first metallic oxide and the second porous metallic oxide comprises at least one of Al₂O₃, CeO₂, ZrO₂, Y₂O₃, La₂O₃ and Nd₂O₃.

Accordingly, the promoter component particle is an oxide comprising at least one of Mn, Fe, Ni, Co, Cu and Zn; and the high heat-resistant oxide comprises ZrO₂ and one or more than one species of CeO₂, Y₂O₃, La₂O₃, CaO and Nd₂O₃.

Further described but not part of the present invention is the use of a promoter component particle, which is an oxide comprising at least one of Ce, La, Nd, Pr, Sm and Dy; and wherein the high heat-resistant oxide comprises Al₂O₃.

In an embodiment, the high heat-resistant oxide of the promoter component particle further comprises at least one of CeO₂, Y₂O₃, La₂O₃ and Nd₂O₃.

Further described but not part of the present invention is the use of a promoter component particle, which is Ce oxide or CeO₂-ZrO₂; and wherein the high heat-resistant oxide is Al₂O₃.

In an embodiment, the promoter component particle is at least one oxide of any one of Mn, Fe, Ni and Co; and wherein the high heat-resistant oxide is ZrO₂-Y₂O₃.

According to the first aspect of the present invention, the catalytic active particles are composed of at least one precious metal; the precious metal comprising at least one of Pt, Pd, Rh, Au, Ag, lr and Ru.

According to the first aspect of the present invention, the first metallic oxide is at least one of Al₂O₃, CeO₂, ZrO₂, La₂O₃ and Nd₂O₃ and the second metallic oxide is at least one of Al₂O₃, CeO₂, ZrO₂, Y₂O₃, La₂O₃ and Nd₂O₃.

According to a second aspect of the invention there is provided a catalyst for purification of exhaust gas comprising a promoter clathrate composed of promoter component particle covered with a high heat-resistant oxide and a catalytic active species adjacent to the promoter clathrate, wherein the promoter component particle is an oxide comprising at least one of Mn, Fe, Ni, Co, Cu and Zn; and the high heat-resistant oxide comprises ZrO₂ and one or more than one species of CeO₂, Y₂O₃, La₂O₃, CaO and Nd₂O₃; and wherein the catalytic active species comprises a composite oxide particle and a porous metallic oxide, wherein the composite oxide particle is caged within the porous metallic oxide so that the composite oxide particle is restrained from being moved; wherein the composite oxide particle comprises at least one precious metal and at least one rare-earth element; wherein the precious metal comprises at least one of Pt, Pd, Rh, Au, Ag, Ir and Ru, wherein the rare-earth element comprises at least one of La, Ce, Pr, Nd and Sm and wherein the metallic oxide comprises at least one of Al₂O₃, CeO₂, ZrO₂, Y₂O₃, La₂O₃ and Nd₂O₃.

Accordingly, the promoter component particle is an oxide comprising at least one of Mn, Fe, Ni, Co, Cu and Zn; and the high heat-resistant oxide comprises ZrO₂ and one or more than one species of CeO₂, Y₂O₃, La₂O₃, CaO and Nd₂O₃.

Further described but not part of the present invention is the use of a promoter component particle, which is an oxide comprising at least one of Ce, La, Nd, Pr, Sm and Dy; and wherein the high heat-resistant oxide comprises Al₂O₃.

In an embodiment, the high heat-resistant oxide further comprises at least one of CeO₂, Y₂O₃, La₂O₃ and Nd₂O₃.

In an embodiment, the promoter component particle is at least one of Mn, Fe, Ni and Co oxides; and wherein the high heat-resistant oxide is ZrO₂-Y₂O₃.

Further described but not part of the present invention is the use of a promoter component particle, which is Ce oxide or CeO₂-ZrO₂; and wherein the high heat-resistant oxide is Al₂O₃.

According to the second aspect of the present invention, the precious metal is at least one of Pt, Pd, Rh, Au, Ag, lr and Ru and the rare-earth element is at least one of La, Ce, Pr, Nd and Sm.

Furthermore, the metal oxide located around the composite oxide is at least one of Al₂O₃, CeO₂, ZrO₂, Y₂O₃, La₂O₃ and Nd₂O₃.

Further described but not part of the invention is an exhaust system or a vehicle having a catalyst set out in any of the preceding paragraphs.

For example, an exhaust gas purification catalyst may comprise a promoter clathrate having a promoter component particle covered with a high heat-resistant oxide. The catalyst according to this embodiment further comprises a catalytic active species adjacent to the promoter clathrate. The catalytic active species includes a first metallic oxide, catalytic active particles born on the first metallic oxide and a second metallic oxide. The second metallic oxide operates as a cage around the catalytic active particles and the first metallic oxide.

In another example, the catalyst may comprise a promoter clathrate wherein a promoter component particle is covered with a high heat-resistant oxide. The catalyst further comprises a catalytic active species adjacent to the promoter clathrate, and the catalytic active species comprises a composite oxide particle and a metal oxide. The composite oxide particle is at least one precious metal and at least one rare-earth element, and the metal oxide operates as a cage around the composite oxide particle.

Within the scope of this application it is envisaged that the various aspects, embodiments, examples, features and alternatives set out in the preceding paragraphs, in the claims and/or in the following description may be taken individually or in any combination thereof.

The present invention will now be described, by way of example only, with reference to the accompanying drawings in which:
FIG. 1 is a schematic view of an example of a catalyst for purification of exhaust gas in accordance with an embodiment as disclosed herein; and
FIG. 2 is a schematic view of another example of a catalyst for purification of exhaust gas in accordance with an embodiment as disclosed herein.

In order to reduce toxic emissions gases and to compensate for the deterioration in catalyst performance based on longer driving distances and higher driving speeds, excess amounts of precious metals are required. One main cause of deterioration in conventional emission catalysts is the reduction in the effective catalytic surface area, as well as reduction of the promoter active area. This reduction occurs when the precious metal particles or promoter particles migrate, unite and cause grain growths on the stable metal oxide surface when exposed to emissions at high temperatures. In contrast, embodiments of the invention disclosed herein prevent cohesion and grain growth of both the promoter and the precious metals.

Hereinafter, certain embodiments of the inventive catalyst are described with reference to the accompanying drawings.

The exhaust gas purification catalyst in the disclosed embodiments comprises a catalytic active species and a promoter clathrate adjacent to the catalytic active species. Any known catalytic active species may be employed as the catalytic active species. An example of the catalyst having a proper catalytic active species is explained below.

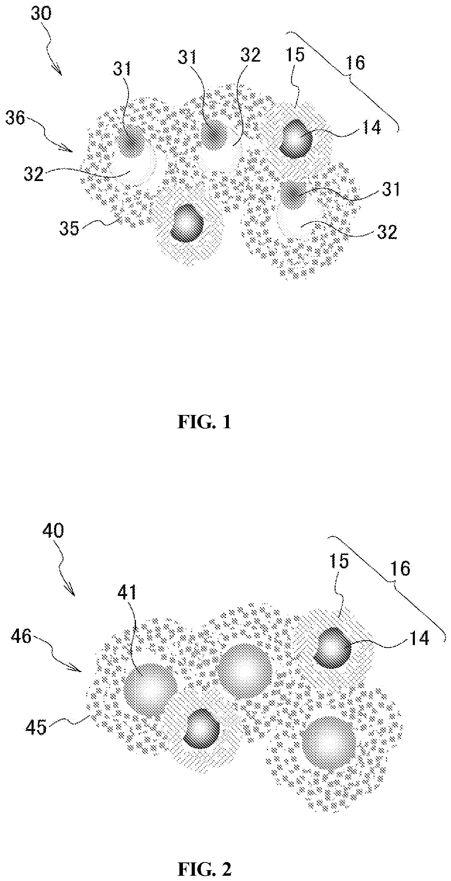

FIG. 1 shows an example of a catalyst for purifying exhaust gas in accordance with an embodiment of the invention. A catalyst 30 shown in FIG. 1 has the promoter clathrate 16 consisting of the promoter component particle 14 and the high heat resistant oxide 15 covering the promoter component particle 14.

A catalytic active species 36 is located adjacent to the promoter clathrates 16, which include promoter component particles 14. The catalytic active species 36 has a precious metallic particle 31 having a catalyst activity, a metallic oxide particle 32 for bearing the precious metallic particle 31, and a metallic oxide 35 operating as a cage or lattice-like structure around the metallic oxide particle 32 and the precious metallic particle 31.

In the catalyst 30, the precious metallic particle 31 is born by the metallic oxide particle 32, restraining particle movement by an anchor effect with the metallic oxide particle 32. In addition, the precious metallic particle 31 is caged within the metallic oxide 35. To this end, the particle movement of the precious metallic particle 31 is further restrained by the clathrate effect of the metallic oxide 35. Therefore, the precious metallic particles 31 are restrained from being moved and cohered with each other at a high temperature. This eliminates deterioration of the catalyst activity due to grain growth. Although the precious metallic particle 31 is caged within the metallic oxide 35, the metallic oxide 35 is a porous material having an air-permeability. The exhaust gas thus sufficiently reaches the precious metallic particles 31 for purification by the precious metallic particle 31. Therefore, the function of the precious metallic particles 31 is not damaged.

FIG. 2 shows another example of a catalyst for purifying exhaust gas. Similar to the catalyst 30 for purification of exhaust gas, a catalyst 40 shown in FIG. 2 has the promoter clathrate 16 consisting of the promoter component particle 14 and the high heat-resistant oxide 15 for covering the promoter component particle 14.

A catalytic active species 46 is located adjacent to the promoter clathrates 16, which include the promoter particles 14. The catalytic active species 46 has a composite oxide particle 41 having precious metals and rare-earth elements. It also has a metallic oxide 45 that cages the composite oxide particle 41. The catalytic active species 46 is comprised of the composite oxide particle 41 with the metallic oxide 45 operating as a cage or lattice-like structure around the composite oxide particle 41.

In the catalyst 40, the composite oxide particle 41, composed of the precious metals and rare-earth elements, has a heat resistance, thereby slowing decomposition of the precious metals. The heat resistance of the exhaust gas purification catalyst is improved, extending the life of the catalyst.

Because the composite oxide particle 41 is caged within the metallic oxide 45, the particle movement of the composite oxide particle 41 is restrained by the clathrate effect of the metallic oxide 45. Therefore, the composite oxide particle 41 will not come in contact with one another and cohere with one another at high temperatures, thereby diminishing deterioration of the catalyst activity by grain growth. Although the composite oxide particle 41 is caged within the metallic oxide 45, the metallic oxide 45 is a porous material having an air-permeability; therefore, the exhaust gas sufficiently reaches the composite oxide particle 41 for purification by the precious metallic component contained therein. Accordingly, the function of the active precious metals is not compromised.

In each embodiment of the exhaust gas purification catalyst, the promoter component particle 14 is an oxide including at least one of Mn, Fe, Ni, Co, Cu and Zn. The high heat-resistant oxide 15 comprises at least ZrO₂ or a composite oxide containing ZrO₂ as the promoter clathrate 16 and further comprises at least one of CeO₂, Y₂O₃, La₂O₃, CaO and Nd₂O₃. ZrO₂ has a porous shape, and the shape can be maintained without reacting with the promoter component particle in an exhaust gas environment. CeO₂, Y₂O₃, La₂O₃, CaO or Nd₂O₃, serves as a stabilizer for the heat resistance of the high heat-resistant oxide 15 when the high heat-resistant oxide 15 includes ZrO₂.

In the embodiments of the catalyst disclosed herein, the promoter component is limited to Mn, Fe, Co, Cu and Zn.

Additional combination examples of the promoter component particle 14 and the high heat-resistant oxide are:
1. (1) Combination wherein the promoter component particle 14 is Mn oxide and the high heat-resistant oxide 15 is ZrO₂-Y₂O₃;
2. (2) Combination wherein the promoter component particle 14 is Fe oxide and the high heat-resistant oxide 15 is ZrO₂-Y₂O₃;
3.
   (3) Combination wherein the promoter component particle 14 is Ni oxide and the high heat-resistant oxide 15 is ZrO₂-Y₂O₃; and
   (4) Combination wherein the promoter component particle 14 is Co oxide and the high heat-resistant oxide 15 is ZrO₂-Y₂O₃.

These are only examples of appropriate combinations and are not intended to be a complete list. The catalyst is not limited to Combinations (1) to (4).

In the embodiments of the catalyst as disclosed herein, the precious metallic particles are at least one of Pt, Pd, Rh, Au, Ag, lr and Ru. The precious metallic particles are born in the bearing body, i.e., the metallic oxide particle, by impregnation.

In the catalyst 30 shown in FIG. 1, the metallic oxide particle 32 for bearing the precious metallic particle 31 comprises at least one metallic oxide selected from Al₂O₃, CeO₂, ZrO₂, Y₂O₃, La₂O₃ and Nd₂O₃. When the metallic oxide particle 32 for bearing the precious metallic particle 31 is at least one of Al₂O₃, CeO₂, ZrO₂, Y₂O₃, La₂O₃ and Nd₂O₃, the metallic oxide 35 is an appropriate metallic oxide for covering the precious metallic particle 31.

In the catalyst 40 shown in FIG. 2, the precious metal for constituting the composite oxide particle 41 is selected from at least one of Pt, Pd, Rh, Au, Ag, lr and Ru. The rare-earth elements for forming the composite oxide particle 41 with the precious metal are selected from at least one of La, Ce, Pr, Nd and Sm. Since the composite oxide particle 41 has heat resistance, the decomposition of the precious metallic oxide is restrained even under a high temperature environment so that the heat resistance of the catalyst 40 for purifying exhaust gas is improved.

The metallic oxide 45 covering the composite oxide particle 41 comprises at least one of Al₂O₃, CeO₂, ZrO₂, Y₂O₃, La₂O₃ and Nd₂O₃.

In order to produce the catalyst 30 shown in FIG. 1, for example, a catalytic active species is produced by adding a colloid solution of the precious metal to a solution containing a material sol of the metallic oxide and the metallic oxide for bearing, and then stirring and drying the solution. Further, to provide the promoter clathrate 16, the promoter particle is colloidized by mixing with a high molecular protecting material. Then, the material for clathrating the promoter particle with a precursor of the high heat-resistant oxide is produced by mixing and stirring the colloid solution and the precursor of the high heat-resistant oxide. Subsequently, a powder of the catalyst shown in FIG. 1 can be obtained by mixing and then drying or sintering the catalytic active species and the material of the promoter clathrate in the solution.

In order to produce the catalyst 40 shown in the embodiment of FIG. 2, for example, a composite oxide powder is formed by mixing the precious metallic material solution and the rare-earth elements material solution and depositing a composite oxide precursor containing the precious metal and the rare-earth elements therein, and then filtering, drying and plasticizing the composite oxide precursor. Subsequently, a powder of the catalyst shown in FIG. 2 can be obtained by forming a heat resistant oxide precursor to be deposited around a particle of the composite oxide powder by mixing the composite oxide powder and the heat resistant oxide material solution, and then filtering, drying and plasticizing the heat resistant oxide precursor.

Embodiments of the catalyst taught herein are further described below.

Embodiment 1 is an example of the catalyst for purifying exhaust gas shown in FIG. 1, wherein the promoter component is manganese oxide, the high heat-resistant oxide for covering the promoter is zirconia solid solution, and the catalytic active species is a catalyst for bearing Pt with CeO₂ and clathrating it with alumina.

### (a) Production of promoter clathrate

Manganese oxide suspension is obtained by adding 10.0g of manganese oxide into 200g of water and mixing it, and then adding 10.0g of polyvinylpyrrolidone thereto.

Separately, zirconia-ytrria precursor is obtained by adding 420.78g of nitric acid zirconyl (ZrO(NO₃)₂·2H₂O) and 4.66g of nitric acid yttrium (Y(NO₃)₃·6H₂O) into 2000g of water and mixing it, and then distilling while stirring until the 25% ammonia aqueous solution becomes pH 11. Subsequently, zirconia-yttrium precursor cake is obtained by filtering and washing sediment thereof with water. Such a cake, 2000g of water and the manganese oxide suspension previously produced are added, and then stirred again.

### (b) Production of precious metallic anchor clathrate

200.27g of aluminum isopropoxide and 57.11g of acetylacetonato cerium are added into 1792g of 2-methyl-2,4-pentanediol, and then stirred and dissolved. After the dissolution, 75g of polyvinylpyrrolidone Pt (Pt : 4 wt%) is added thereto while being stirred. A dried powder is obtained by decompressing and drying the mixture.

### (c) Production of promoter clathrate + precious metallic clathrate

A dried powder of precious metallic clathrate is added into the mixed solution of the manganese oxide suspension and the zirconia-yttria precursor previously produced, and then stirred again.

After being stirred, a supernatant is thrown away by calming. Then, moisture is evaporated by leaving the solution in a thermostat at 150°C for a day. The catalytic powder is obtained by plasticizing the dried powder at 400°C for one hour.

Embodiment 2 is an example of the catalyst for purifying exhaust gas shown in FIG. 1 wherein the promoter component is iron oxide, the high heat-resistant oxide for covering the promoter is zirconia solid solution, and the catalytic active species is a catalyst for bearing Pt with CeO₂ and clathrating it with alumina.

### (a) Production of promoter clathrate

Iron oxide suspension is obtained by adding 10.0g of iron oxide into 200g of water and mixing it, and then adding 10.0g of polyvinylpyrrolidone thereto.

Separately, zirconia-ytrria precursor is obtained by adding 420.78g of nitric acid zirconyl (ZrO(NO₃)₂·2H₂O) and 4.66g of nitric acid yttrium (Y(NO₃)₃·6H₂O) into 2000g of water and mixing it, and then distilling while stirring until the 25% ammonia aqueous solution becomes pH 11. Subsequently, zirconia-yttrium precursor cake is obtained by filtering and washing sediment thereof with water. Such a cake, 2000g of water and the iron oxide suspension previously produced are added, and then stirred again.

### (b) Production of precious metallic anchor clathrate

200.27g of aluminum isopropoxide and 57.11g of acetylacetonato ceriumare added into 1792g of 2-methyl-2,4-pentanediol, and then stirred and dissolved. After the dissolution, 75g of polyvinylpyrrolidone Pt (Pt : 4 wt%) is added thereto while being stirred. A dried powder is obtained by decompressing and drying the mixture.

### (c) Production of promoter clathrate + precious metallic clathrate

A dried powder of precious metallic clathrate is added into the mixed solution of the iron oxide suspension and the zirconia-yttria precursor mixture previously produced, and then stirred again.

After being stirred, a supernatant is thrown away by calming. Then, moisture is evaporated by leaving the solution in a thermostat at 150°C for a day. The catalytic powder is obtained by plasticizing the dried powder at 400°C for one hour.

Embodiment 3 is an example of the catalyst for purifying exhaust gas shown in FIG. 1, wherein the promoter component is nickel oxide, the high heat-resistant oxide for covering the promoter is zirconia solid solution, and the catalytic active species is a catalyst for bearing Pt with CeO₂ and clathrating it with alumina.

### (a) Production of promoter clathrate

Oxide nickel suspension is obtained by adding 10.0g of nickel oxide into 200g water and mixing it, and then adding 10.0g of polyvinylpyrrolidone thereto.

Separately, zirconia-ytrria precursor is obtained by adding 420.78g of nitric acid zirconyl (ZrO(NO₃)₂·2H₂O) and 4.66g of nitric acid yttrium (Y(NO₃)₃·6H₂O) into 2000g of water and mixing it, and then distilling while stirring until the 25% ammonia aqueous solution becomes pH 11. Subsequently, zirconia-yttrium precursor cake is obtained by filtering and washing sediment thereof with water. Such a cake, 2000g of water and the nickel oxide suspension previously produced are added, and then stirred again.

### (b) Production of precious metallic anchor clathrate

200.27g of aluminum isopropoxide and 57.11 g of acetylacetonato ceriumare added into 1792g of 2-methyl-2,4-pentanediol, and then stirred and dissolved. After the dissolution, 75g of polyvinylpyrrolidone Pt (Pt : 4 wt%) is added thereto while being stirred. A dried powder is obtained by decompressing and drying the mixture.

### (c) Production of promoter clathrate + precious metallic clathrate

A dried powder of the precious metallic clathrate is added into the mixed solution of the nickel oxide suspension and the zirconia-yttria precursor previously produced, and then stirred again.

After being stirred, a supernatant is thrown away by calming, and then moisture is evaporated by leaving the solution in a thermostat at 150°C for a day. The catalytic powder is obtained by plasticizing the dried powder at 400°C for one hour.

Embodiment 4 is an example of the catalyst for purifying exhaust gas shown in FIG. 1, wherein the promoter component is cobalt oxide, the high heat-resistant oxide for covering the promoter is zirconia solid solution, and the catalytic active species is a catalyst for bearing Pt with CeO₂ and clathrating it with alumina.

### (a) Production of promoter clathrate

Cobalt oxide suspension is obtained by adding 10.0g of cobalt oxide into 200g of water and mixing it, and then adding 10.0g of polyvinylpyrrolidone thereto.

Separately, zirconia-ytrria precursor is obtained by adding 420.78g of nitric acid zirconyl (ZrO(NO₃)₂·2H₂O) and 4.66g of nitric acid yttrium (Y(NO₃)₃·6H₂O) into 2000g of water and mixing it, and then distilling while stirring until the 25% ammonia aqueous solution becomes pH 11. Subsequently, zirconia-yttrium precursor cake is obtained by filtering and washing sediment thereof with water. Such a cake, 2000g of water and the cobalt oxide suspension previously produced are added, and then stirred again.

### (b) Production of precious metallic anchor clathrate

200.27g of aluminum isopropoxide and 57.11g of acetylacetonato ceriumare added into 1792g of 2-methyl-2,4-pentanediol, and then stirred and dissolved. After the dissolution, 75g of polyvinylpyrrolidone Pt (Pt : 4 wt%) is added thereto while being stirred. A dried powder is obtained by decompressing and drying the mixture.

### (c) Production of promoter clathrate + precious metallic clathrate

A dried powder of precious metallic clathrate is added into the mixed solution of the cobalt oxide suspension and the zirconia-yttria precursor previously produced, and then stirred again.

After being stirred, a supernatant is thrown away by calming, and then moisture is evaporated by leaving the solution in a thermostat at 150°C for a day. The catalytic powder is obtained by plasticizing the dried powder at 400°C for one hour.

Embodiment 5 (not falling under the scope of the present invention) is an example of the catalyst for purifying exhaust gas shown in FIG. 1, wherein the promoter component is cerium oxide, the high heat-resistant oxide for covering the promoter is alumina, and the catalytic active species is a catalyst for bearing Pt with CeO₂ and clathrating it with alumina.

### (a) Production of promoter clathrate

Cerium oxide suspension is obtained by adding 10.0g of cerium oxide into 200g of water and mixing it, and then adding 10.0g of polyvinylpyrrolidone thereto.

Separately, 112.36g of hydration aluminum oxide is added into 2000g of water and mixed. Then, the cerium oxide suspension previously produced is added thereto and stirred again.

### (b) Production of precious metallic anchor clathrate

200.27g of aluminum isopropoxide and 57.11 g of acetylacetonato cerium are added into 1792g of 2-methyl-2,4-pentanediol, and then stirred and dissolved. After the dissolution, 75g of polyvinylpyrrolidone Pt (Pt : 4 wt%) is added thereto while being stirred. A dried powder is obtained by decompressing and drying the mixture.

### (c) Production of promoter clathrate + precious metallic clathrate

A dried powder of precious metallic clathrate is added into the mixed solution of the cerium oxide suspension and the hydration aluminum oxide previously produced, and then stirred again.

After being stirred, a supernatant is thrown away by calming. Then, moisture is evaporated by leaving the solution in a thermostat at 150°C for a day. The catalytic powder is obtained by plasticizing the dried powder at 400°C for one hour.

Embodiment 6 (not falling under the scope of the present invention) is an example of the catalyst for purifying exhaust gas shown in FIG. 1, wherein the promoter component is cerium oxide-zirconium oxide solid solution, the high heat-resistant oxide for covering the promoter is alumina, and the catalytic active species is a catalyst for bearing Pt with CeO₂ and clathrating it with alumina.

### (a) Production of promoter clathrate

Cerium oxide-zirconium oxide solid solution suspension is obtained by adding 10.0g of the cerium oxide-zirconium oxide solid solution (mol ratio of Ce : Zr = 80 : 20) into 200g of water and mixing it, and then adding 10.0g of polyvinylpyrrolidone thereto.

Separately, 112.36g of hydration aluminum oxide is added into 2000g of water and mixed. Then, the cerium oxide-zirconium oxide solid solution suspension previously produced is added thereto and stirred again.

### (b) Production of precious metallic anchor clathrate

200.27g of aluminum isopropoxide and 57.11g of acetylacetonato cerium are added into 1792g of 2-methyl-2,4-pentanediol, and then stirred and dissolved. After the dissolution, 75g of polyvinylpyrrolidone Pt (Pt : 4 wt%) is added thereto while being stirred. A dried powder is obtained by decompressing and drying the mixture.

### (c) Production of promoter clathrate + precious metallic clathrate

A dried powder of the precious metallic clathrate is added into the mixed solution of cerium oxide-zirconium oxide and hydration aluminum oxide previously produced, and then stirred again.

After being stirred, a supernatant is thrown away by calming. Then, moisture is evaporated by leaving the solution in a thermostat at 150°C for a day. The catalytic powder is obtained by plasticizing the dried powder at 400°C for one hour.

Embodiment 7 is an example of the catalyst for purifying exhaust gas shown in FIG. 2, wherein the promoter component is manganese oxide, the high- heat-resistant oxide for covering the promoter is zirconia solid solution, and the catalytic active species is a Pd-Nd composite oxide catalyst.

### (a) Production of promoter clathrate

Manganese oxide suspension is obtained by adding 10.0g of manganese oxide into 200g of water, and then adding 10.0g of polyvinylpyrrolidone thereto.

Separately, zirconia-ytrria precursor is obtained by adding 420.78g of nitric acid zirconyl (ZrO(NO₃)₂·2H₂O) and 4.66g of nitric acid yttrium (Y(NO₃)₃·6H₂O) into 2000g of water and mixing it, and then distilling while stirring until the 25% ammonia aqueous solution becomes pH 11. Subsequently, zirconia-yttrium precursor cake is obtained by filtering and washing sediment thereof with water. Such a cake, 2000g of water and the manganese oxide suspension previously produced are added, and then stirred again.

### (b) Production of catalyst composite oxide clathrate

49.094g of nitric acid neodymium (Nd(NO₃)₃·6H₂O) and 28.342g of nitric acid palladium solution (Pd 20.764 wt%) are added hto 1000g of water and mixed. Then, the 25% ammonia aqueous solution is distilled while being stirring until it becomes pH 11.

Subsequently, a supernatant is thrown away by filtering and washing with water, and then moisture is evaporated by leaving the solution in a thermostat at 150°C for a day. The composite oxide powder is obtained by plasticizing the dried powder at 400°C for one hour.

558.33g of nitric acid aluminum (Al(NO₃)₃·9H₂O) and the composite oxide powder previously produced are added into 3000g of water and mixed, and the 25% ammonia aqueous solution is distilled while being stirred until it becomes pH 9. Subsequently, a supernatant is thrown away by filtering and washing with water. Then, moisture is evaporated by leaving the solution in a thermostat at 150°C for a day.

The powder obtained by drying is allowed to be a composite oxide catalytic active unit powder for arranging Al₂O₃ around the composite oxide powder by plasticizing the powder at 400°C for an hour.

### (c) Production of promoter clathrate + precious metallic clathrate

The catalytic composite oxide dried powder is added into the mixed solution of the manganese oxide suspension and the zirconia-yttria precursor previously produced, and then stirred again.

After being stirred, a supernatant is thrown away by calming. Then, moisture is evaporated by leaving the solution in a thermostat at 150°C for a day. The catalytic powder is obtained by plasticizing the dried powder at 400°C for one hour.

Embodiment 8 is an example of the catalyst for purifying exhaust gas shown in FIG. 2, wherein the promoter component is iron oxide, the high heat-resistant oxide for covering the promoter is zirconia solid solution, and the catalytic active species is Pd-Nd composite oxide catalyst.

### (a) Production of promoter clathrate

Iron oxide suspension is obtained by adding 10.0g of the iron oxide into 200g of water and mixing it, and then adding 10.0g of polyvinylidone thereto.

Separately, zirconia-ytrria precursor is obtained by adding 420.78g of nitric acid zirconyl (ZrO(NO₃)₂·2H₂O) and 4.66g of nitric acid yttrium (Y(NO₃)₃·6H₂O) into 2000g of water and mixing it, and then distilling while stirring until the 25% ammonia aqueous solution becomes pH 11. Subsequently, zirconia-yttrium precursor cake is obtained by filtering and washing sediment thereof with water. Such a cake, 2000g of water and the manganese oxide suspension previously produced are added, and then stirred again.

### (b) Production of catalyst composite oxide clathrate

49.094g of nitric acid neodymium (Nd(NO₃)₃·6H₂O) and 28.342g of nitric acid palladium solution (Pd 20.764 wt%) are added into 1000g of water and mixed. Then, the 25% ammonia aqueous solution is distilled while being stirring until it becomes pH 11.

Subsequently, a supernatant is thrown away by filtering and washing with water. Then, moisture is evaporated by leaving the solution in a thermostat at 150°C for a day. The composite oxide powder is obtained by plasticizing the dried powder at 400°C for one hour.

558.33g of nitric acid aluminum (Al(NO₃)₃·9H₂O) and the composite oxide powder previously produced are added into 3000g of water and mixed, and the 25% ammonia aqueous solution is distilled while being stirred until it becomes pH 9. Subsequently, a supernatant is thrown away by filtering and washing with water. Then, moisture is evaporated by leaving the solution in a thermostat at 150°C for a day.

The powder obtained by drying is allowed to be a composite oxide catalytic active unit powder for arranging Al₂O₃ around the composite oxide powder by plasticizing the powder at 400°C for an hour.

### (c) Production of promoter clathrate + precious metallic clathrate

The catalytic composite oxide dried powder is added into the mixed solution of the iron oxide suspension and the zirconia-yttria precursor previously produced, and then stirred again.

After being stirred, a supernatant is thrown away by calming. Then, moisture is evaporated by leaving the solution in a thermostat at 150C for a day. The catalytic powder is obtained by plasticizing the dried powder at 400°C for one hour.

Embodiment 9 is an example of the catalyst for purifying exhaust gas shown in FIG. 2, wherein the promoter component is nickel oxide, the high heat-resistant oxide for covering the promoter is zirconia solid solution, and the catalytic active species is a Pd-Nd composite oxide catalyst.

### (a) Production of promoter clathrate

Nickel oxide suspension is obtained by adding 10.0g of nickel oxide into 200g of water and mixing it, and then adding 10.0g of polyvinylidone thereto.

Separately, zirconia-ytrria precursor is obtained by adding 420.78g of nitric acid zirconyl (ZrO(NO₃)₂·2H₂O) and 4.66g of nitric acid yttrium (Y(NO₃)₃·6H₂O) into 2000g of water and mixing it, and then distilling while stirring until the 25% ammonia aqueous solution becomes pH 11. Subsequently, zirconia-yttrium precursor cake is obtained by filtering and washing sediment thereof with water. Such a cake, 2000g of water and the manganese oxide suspension previously produced are added, and then stirred again.

### (b) Production of catalyst composite oxide clathrate

49.094g of nitric acid neodymium (Nd(NO₃)₃·6H₂O) and 28.342g of nitric acid palladium solution (Pd 20.764 wt%) are added into 1000g of water and mixedThen, the 25% ammonia aqueous solution is distilled while being stirring until it becomes pH 11.

Subsequently, a supernatant is thrown away by filtering and washing with water. Then, moisture is evaporated by leaving the solution in a thermostat at 150C for a day. The composite oxide powder is obtained by plasticizing the dried powder at 400°C for one hour.

558.33g of nitric acid aluminum (Al(NO₃)₃·9H₂O) and the composite oxide powder previously produced are added into 3000g of water and mixed. Then, the 25% ammonia aqueous solution is distilled while being stirred until it becomes pH 9. Subsequently, a supernatant is thrown away by filtering and washing with water. Then, moisture is evaporated by leaving the solution in a thermostat at 150C for a day.

The powder obtained by drying is allowed to be a composite oxide catalytic active unit powder for arranging Al₂O₃ around the composite oxide powder by plasticizing the powder at 400°C for an hour.

### (c) Production of promoter clathrate + precious metallic clathrate

The catalytic composite oxide dried powder is added into the mixed solution of the nickel oxide suspension and the zirconia-yttria precursor previously produced, and then stirred again.

After being stirred, a supernatant is thrown away by calming. Then, moisture is evaporated by leaving the solution in a thermostat at 150C for a day. The catalytic powder is obtained by plasticizing the dried powder at 400°C for one hour.

Embodiment 10 is an example of the catalyst for purifying exhaust gas shown in FIG. 2, wherein the promoter component is cobalt oxide, the high heat-resistant oxide for covering the promoter is zirconia solid solution, and the catalytic active species is Pd-Nd composite oxide catalyst.

### (a) Production of promoter clathrate

Cobalt oxide suspension is obtained by adding 10.0g of cobalt oxide into 200g of water and mixing it, and then adding 10.0g of polyvinylidone thereto.

Separately, zirconia-ytrria precursor is obtained by adding 420.78g of nitric acid zirconyl (ZrO(NO₃)₂·2H₂O) and 4.66g of nitric acid yttrium (Y(NO₃)₃·6H₂O) into 2000g of water and mixing it, and then distilling while stirring until the 25% ammonia aqueous solution becomes pH 11. Subsequently, zirconia-yttrium precursor cake is obtained by filtering and washing sediment thereof with water. Such a cake, 2000g of water and the cobalt oxide suspension previously produced are added, and then stirred again.

### (b) Production of catalyst composite oxide clathrate

49.094g of nitric acid neodymium (Nd(NO₃)₃·6H₂O) and 28.342g of nitric acid palladium solution (Pd 20.764 wt%) are added into 1000g of water and mixedThen, the 25% ammonia aqueous solution is distilled while being stirring until it becomes pH 11.

Subsequently, a supernatant is thrown away by filtering and washing with water. Then, moisture is evaporated by leaving the solution in a thermostat at 150C for a day. The composite oxide powder is obtained by plasticizing the dried powder at 400°C for one hour.

558.33g of nitric acid aluminum (Al(NO₃)₃·9H₂O) and the composite oxide powder previously produced are added into 3000g of water and mixed. Then, the 25% ammonia aqueous solution is distilled while being stirred until it becomes pH 9. Subsequently, a supernatant is thrown away by filtering and washing with water. Then, moisture is evaporated by leaving the solution in a thermostat at 150C for a day.

The powder obtained by drying is allowed to be a composite oxide catalytic active unit powder for arranging Al₂O₃ around the composite oxide powder by plasticizing the powder at 400°C for an hour.

### (c) Production of promoter clathrate + precious metallic clathrate

The catalytic composite oxide dried powder is added into the mixed solution of the cobalt oxide suspension and the zirconia-yttria precursor previously produced, and then stirred again.

After being stirred, a supernatant is thrown away by calming. Then, moisture is evaporated by leaving the solution in a thermostat at 150C for a day. The catalytic powder is obtained by plasticizing the dried powder at 400°C for one hour.

Embodiment 11 (not falling under the scope of the present invention) is an example of the catalyst for purifying exhaust gas shown in FIG. 2, wherein the promoter component is cerium oxide, the high heat-resistant oxide for covering the promoter is alumina, and the catalytic active species is Pd-Nd composite oxide.

### (a) Promoter clathrate

Cerium oxide suspension is obtained by adding 10.0g of cerium oxide into 00g of water and mixing it, and then adding 10.0g of polyvinylidone thereto.

Separately, 112.36g of hydration aluminum oxide is added into 2000g of water and mixed. Then, the cerium oxide suspension previously produced is added thereto and stirred again.

### (b) Catalyst composite oxide clathrate

49.094g of nitric acid neodymium (Nd(NO₃)₃·6H₂O) and 28.342g of nitric acid palladium solution (Pd 20.764 wt%) are added into 1000g of water and mixedThen, the 25% ammonia aqueous solution is distilled while being stirring until it becomes pH 11.

Subsequently, a supernatant is thrown away by filtering and washing with water. Then, moisture is evaporated by leaving the solution in a thermostat at 150C for a day. The composite oxide powder is obtained by plasticizing the dried powder at 400°C for one hour.

558.33g of nitric acid aluminum (Al(NO₃)₃·9H₂O) and the composite oxide powder previously produced are added into 3000g of water and mixed. Then, the 25% ammonia aqueous solution is distilled while being stirred until it becomes pH 9. Subsequently, a supernatant is thrown away by filtering and washing with water. Then, moisture is evaporated by leaving the solution in a thermostat at 150C for a day.

The powder obtained by drying is allowed to be a composite oxide catalytic active unit powder for arranging Al₂O₃ around the composite oxide powder by plasticizing the powder at 400°C for an hour.

### (c) Production of promoter clathrate + precious metallic clathrate

The catalytic composite oxide dried powder is added into the mixed solution of the cerium oxide suspension and the zirconia-yttria precursor previously produced, and then stirred again.

After being stirred, a supernatant is thrown away by calming. Then, moisture is evaporated by leaving the solution in a thermostat at 150°C for a day. The catalytic powder is obtained by plasticizing the dried powder at 400°C for one hour.

Embodiment 12 (not falling under the scope of the present invention) is an example of the catalyst for purifying exhaust gas shown in FIG. 2, wherein the promoter component is cerium oxide-zirconium oxide solid solution, the high heat-resistant oxide for covering the promoter is alumina, and the catalytic active species is Pd-Nd composite oxide catalyst.

### (a) Production of promoter clathrate

Cerium oxide-zirconium oxide solid solution suspension is obtained by adding 10.0g of the cerium oxide-zirconium oxide solid solution (mol ratio of Ce : Zr = 80 : 20) into 200g of water and mixing it, and then adding 10.0g of polyvinylpyrrolidone thereto.

Separately, 112.36g of hydration aluminum oxide is added into 2000g of water and mixed. Then, the cerium oxide-zirconium oxide solid solution suspension previously produced is added thereto and stirred again.

### (b) Production of catalyst composite oxide clathrate

49.094g of nitric acid neodymium (Nd(NO₃)₃·6H₂O) and 28.342g of nitric acid palladium solution (Pd 20.764 wt%) are added into 1000g of water and mixedThen, the 25% ammonia aqueous solution is distilled while being stirring until it becomes pH 11.

Subsequently, a supernatant is thrown away by filtering and washing with water. Then, moisture is evaporated by leaving the solution in a thermostat at 150C for a day. The composite oxide powder is obtained by plasticizing the dried powder at 400°C for one hour.

558.33g of nitric acid aluminum (Al(NO₃)₃·9H₂O) and the composite oxide powder previously produced are added into 3000g of water and mixed, and the 25% ammonia aqueous solution is distilled while being stirred until it becomes pH 9. Subsequently, a supernatant is thrown away by filtering and washing with water. Then, moisture is evaporated by leaving the solution in a thermostat at 150C for a day.

The powder obtained by drying is allowed to be a composite oxide catalytic active unit powder for arranging Al₂O₃ around the composite oxide powder by plasticizing the powder at 400°C for one hour.

### (c) Production of promoter clathrate + precious metallic clathrate

The catalytic composite oxide dried powder is added into the mixed solution of the manganese oxide suspension and the zirconia-yttria precursor previously produced, and then stirred again.

After being stirred, a supernatant is thrown away by calming. Then, moisture is evaporated by leaving the solution in a thermostat at 150C for a day. The catalytic powder is obtained by plasticizing the dried powder at 400°C for one hour.

Comparative Example 1 is an example of a catalyst for purifying exhaust gas, which does not comprise a promoter clathrate.

Catalytic powder is obtained by impregnating 100g of the aluminum oxide and the dinitrodiamine platinum such that Pt becomes 1.5 wt%.

Comparative Example 2 is an example of a catalyst for purifying exhaust gas, which includes manganese oxide as promoter component but does not comprise a high heat-resistant oxide for covering the promoter component. Comparative Example 2 is an example comparable with Embodiment 2 wherein the catalytic active species is an impregnation catalyst.

Manganese oxide suspension is obtained by adding 5.0g of manganese oxide into 200g of water and mixing it, and then adding 5.0g of polyvinylpyrrolidone thereto.

The catalytic powder and the manganese oxide suspension are added into 2000g of water, and then stirred again wherein 100g of the aluminum oxide and the dinitrodiamine platinum are impregnated in the catalytic powder such that the Pt becomes 3.0 wt%. After being stirred, a supernatant is thrown away by calming. Then, moisture is evaporated by leaving the solution in a thermostat at 150C for a day. The catalytic powder is obtained by plasticizing the dried powder at 400°C for one hour.

Comparative Example 3 is an example of a catalyst for purifying exhaust gas, which includes iron oxide as a promoter component but does not comprise a high heat-resistant oxide for covering the promoter component. Comparative Example 3 is an example comparable with Embodiment 2 wherein the catalytic active species is an impregnation catalyst.

Iron oxide suspension is obtained by adding 5.0g of iron oxide into 200g of water and mixing it, and then adding 5.0g of polyvinylpyrrolidone thereto.

The catalytic powder and the iron oxide suspension are added into 2000g of water and then stirred again, wherein 100g of aluminum oxide and dinitrodiamine platinum are impregnated in the catalytic powder such that Pt becomes 3.0 wt%. After being stirred, a supernatant is thrown away by calming and then moisture is evaporated by leaving the solution in a thermostat at 150C for a day. The catalytic powder is obtained by plasticizing the dried powder at 400°C for one hour.

Comparative Example 4 is an example of a catalyst for purifying exhaust gas, which includes nickel oxide as a promoter component but does not comprise a high heat-resistant oxide for covering the promoter component. Comparative Example 4 is an example comparable with Embodiment 3 wherein the catalytic active species is an impregnation catalyst.

Nickel oxide suspension is obtained by adding 5.0g of nickel oxide into 200g of water and mixing it, and then adding 5.0g of polyvinylpyrrolidone thereto.

The catalytic powder and the nickel oxide suspension are added into 2000g of water and then stirred again, wherein 100g of aluminum oxide and dinitrodiamine platinum are impregnated in the catalytic powder such that Pt becomes 3.0 wt%. After being stirred, a supernatant is thrown away by calming and then moisture is evaporated by leaving the solution in a thermostat at 150C for a day. The catalytic powder is obtained by plasticizing the dried powder at 400°C for one hour.

Comparative Example 5 is an example of a catalyst for purifying exhaust gas, which includes cobalt oxide as a promoter component but does not comprise a high heat-resistant oxide for covering the promoter component. Comparative Example 5 is an example comparable with Embodiment 4 wherein the catalytic active species is an impregnation catalyst.

Cobalt oxide suspension is obtained by adding 5.0g of cobalt oxide into 200g of water and mixing it, and then adding 5.0g of polyvinylpyrrolidone thereto.

The catalytic powder and the cobalt oxide suspension are added into 2000g of water and then stirred again, wherein 100g of the aluminum oxide and the dinitrodiamine platinum are impregnated in the catalytic powder such that Pt becomes 3.0 wt%. After being stirred, a supernatant is thrown away by calming and then moisture is evaporated by leaving the solution in a thermostat at 150C for a day. The catalytic powder is obtained by plasticizing the dried powder at 400°C for one hour.

Comparative Example 6 is an example of a catalyst for purifying exhaust gas, which includes cerium oxide as a promoter component but does not comprise a high heat-resistant oxide for covering the promoter component. Comparative Example 6 is an example comparable with Embodiment 5 (not falling under the scope of the present invention) wherein the catalytic active species is an impregnation catalyst.

Cerium oxide suspension is obtained by adding 5.0g of cerium oxide into 200g of water and mixing it, and then adding 5.0g of polyvinylpyrrolidone thereto.

The catalytic powder and the cerium oxide suspension are added into 2000g of water and then stirred again, wherein 100g of the aluminum oxide and the dinitrodiamine platinum are impregnated in the catalytic powder such that the Pt becomes 3.0 wt%. After being stirred, a supernatant is thrown away by calming and then moisture is evaporated by leaving the solution in a thermostat at 150C for a day. The catalytic powder is obtained by plasticizing the dried powder at 400°C for one hour.

Comparative Example 7 is an example of a catalyst for purifying exhaust gas, which includes cerium oxide-zirconium oxide solid solution as a promoter component but does not comprise a high heat-resistant oxide for covering the promoter component. Comparative Example 7 is an example comparable with Embodiment 6 (not falling under the scope of the present invention) wherein the catalytic active species is an impregnation catalyst.

Cerium oxide-zirconium oxide solid solution suspension is obtained by adding 5.0g of cerium oxide-zirconium oxide solid solution (mol ratio of Ce : Zr = 80 : 20) into 200g of water and mixing it, and then adding 5.0g of polyvinylpyrrolidone thereto.

The catalytic powder and the cerium oxide-zirconium oxide solid solution suspension are added into 2000g of water and then stirred again, wherein 100g of the aluminum oxide and the dinitrodiamine platinum are impregnated in the catalytic powder such that the Pt becomes 3.0 wt%. After being stirred, a supernatant is thrown away by calming and then moisture is evaporated by leaving the solution in a thermostat at 150°C for a day. The catalytic powder is obtained by plasticizing the dried powder at 400°C for one hour.

Comparative Example 8 is an example of using Pd as a precious metallic component instead of Pt, which is a precious metallic component of Comparative Example 1. All other constituents except the above are the same as Comparative Example 1.

Catalytic powder is obtained by impregnating 100g of the aluminum oxide and nitric acid palladium such that Pd becomes 3.5 wt%.

Comparative Example 9 is an example of using Pd as a precious metallic component instead of Pt, which is a precious metallic component of Comparative Example 2. All other constituents except the above are the same as Comparative Example 2.

Manganese oxide suspension is obtained by adding 5.0g of manganese oxide into 200g of water and mixing it, and then adding 5.0g of polyvinylpyrrolidone thereto.

The catalytic powder and the manganese oxide suspension are added into 2000g of water and then stirred again, wherein 100g of the aluminum oxide and the nitric acid palladium are impregnated in the catalytic powder such that Pd becomes 7.0 wt%. After being stirred, a supernatant is thrown away by calming and then moisture is evaporated by leaving the solution in a thermostat at 150C for a day. The catalytic powder is obtained by plasticizing the dried powder at 400°C for one hour.

Comparative Example 10 is an example of using Pd as a precious metallic component instead of Pt, which is a precious metallic component of Comparative Example 3. All other constituents except the above are the same as Comparative Example 3.

Iron oxide suspension is obtained by adding 5.0g of iron oxide into 200g of water and mixing it, and then adding 5.0g of polyvinylpyrrolidone thereto.

The catalytic powder and the iron oxide suspension are added into 2000g of water and then stirred again, wherein 100g of the aluminum oxide and the nitric acid palladium are impregnated in the catalytic powder such that the Pd becomes 7.0 wt%. After being stirred, a supernatant is thrown away by calming and then moisture is evaporated by leaving the solution in a thermostat at 150°C for a day. The catalytic powder is obtained by plasticizing the dried powder at 400°C for one hour.

Comparative Example 11 is an example of using Pd as a precious metallic component instead of Pt, which is a precious metallic component of Comparative Example 4. All other constituents except the above are the same as Comparative Example 4.

Nickel oxide suspension is obtained by adding 5.0g of nickel oxide into 200g of water and mixing it, and then adding 5.0g of polyvinylpyrrolidone thereto.

The catalytic powder and the nickel oxide suspension are added into 2000g of water and then stirred again, wherein 100g of the aluminum oxide and the7.0 wt%. After being stirred, a supernatant is thrown away by calming and then moisture is evaporated by leaving the solution in a thermostat at 150C for a day. The catalytic powder is obtained by plasticizing the dried powder at 400°C for one hour.

Comparative Example 12 is an example of using Pd as a precious metallic component instead of Pt, which is a precious metallic component of Comparative Example 5. All other constituents except the above are the same as Comparative Example 5.

Cobalt oxide suspension is obtained by adding 5.0g of cobalt oxide into 200g of water and mixing it, and then adding 5.0g of polyvinylpyrrolidone thereto.

The catalytic powder and the cobalt oxide suspension are added into 2000g of water and then stirred again, wherein 100g of the aluminum oxide and the nitric acid palladium are impregnated in the catalytic powder such that Pd becomes 7.0 wt%. After being stirred, a supernatant is thrown away by calming and then moisture is evaporated by leaving the solution in a thermostat at 150C for a day. The catalytic powder is obtained by plasticizing the dried powder at 400°C for one hour.

Comparative Example 13 is an example of using Pd as a precious metallic component instead of Pt, which is a precious metallic component of Comparative Example 6. All other constituents except the above are the same as Comparative Example 6.

Cerium oxide suspension is obtained by adding 5.0g of cerium oxide into 200g of water and mixing it, and then adding 5.0g of polyvinylpyrrolidone thereto.

The catalytic powder and the cerium oxide suspension are added into 2000g of water and then stirred again, wherein 100g of the aluminum oxide and the nitric acid palladium are impregnated in the catalytic powder such that Pd becomes 7.0 wt%. After being stirred, a supernatant is thrown away by calming and then moisture is evaporated by leaving the solution in a thermostat at 150C for a day. The catalytic powder is obtained by plasticizing the dried powder at 400°C for one hour.

Comparative Example 14 is an example of using Pd as a precious metallic component instead of Pt, which is a precious metallic component of Comparative Example 7. All other constituents except the above are the same as

Cerium oxide-zirconium oxide solid solution suspension is obtained by adding 5.0g of cerium oxide-zirconium oxide solid solution (mol ratio of Ce : Zr = 80 : 20) into 200g of water and mixing it, and then adding 5.0g of polyvinylpyrrolidone thereto.

The catalytic powder and the cerium oxide suspension are added into 2000g of water and then stirred again, wherein 100g of the aluminum oxide and the nitric acid palladium are impregnated in the catalytic powder such that Pd becomes 7.0 wt%. After being stirred, a supernatant is thrown away by calming and then moisture is evaporated by leaving the solution in a thermostat at 150C for a day. The catalytic powder is obtained by plasticizing the dried powder at 400°C for one hour.

Comparative Example 15 is an example of a catalyst for purifying exhaust gas wherein a promoter component is manganese oxide, a high heat-resistant oxide for covering the promoter is zirconia-based solid solution and a catalytic active species is an impregnation catalyst.

Manganese oxide suspension is obtained by adding 10.0g of manganese oxide into 200g of water and mixing it, and then adding 10.0g of polyvinylpyrrolidone thereto.

Separately, zirconia-ytrria precursor is obtained by adding 420.78g of nitric acid zirconyl (ZrO(NO₃)₂·2H₂O) and 4.66g of nitric acid yttrium (Y(NO₃)₃·6H₂O) into 2000g of water and mixing it, and then distilling while stirring until the 25% ammonia aqueous solution becomes pH 11. Subsequently, zirconia-yttrium precursor cake is obtained by filtering and washing sediment thereof with water. Such a cake, 2000g of water and the manganese oxide suspension previously produced are added and then stirred again.

Further, the catalytic powder is added thereto and then stirred again, wherein 100g of aluminum oxide and dinitrodiamine platinum are impregnated in the catalytic powder such that Pt becomes 3 wt%.

After being stirred, a supernatant is thrown away by calming. Then, moisture is evaporated by leaving the solution in a thermostat at 100°C for a day The catalytic powder is obtained by plasticizing the dried powder at 400°C for one hour.

Comparative Example 16 is an example of a catalyst for purifying exhaust gas wherein a promoter component is iron oxide, a high heat-resistant oxide for covering the promoter is zirconia-based solid solution, and a catalytic active species is an impregnation catalyst.

Iron oxide suspension is obtained by adding 10.0g of iron oxide into 200gof water and mixing it, and then adding 10.0g of polyvinylidone thereto.

Separately, zirconia-ytrria precursor is obtained by adding 420.78g of nitric acid zirconyl (ZrO(NO₃)₂·2H₂O) and 4.66g of nitric acid yttrium (Y(NO₃)₃·6H₂O) into 2000g of water and mixing it, and then distilling while stirring until the 25% ammonia aqueous solution becomes pH 11. Subsequently, zirconia-yttrium precursor cake is obtained by filtering and washing sediment thereof with water. Such a cake, 2000g of water and the iron oxide suspension previously produced are added and then stirred again.

Further, the catalytic powder is added thereto and then stirred again, wherein 100g of aluminum oxide and dinitrodiamine platinum are impregnated in the catalytic powder such that the Pt becomes 3 wt%.

After being stirred, a supernatant is thrown away by calming. Then, moisture is evaporated by leaving the solution in a thermostat at 100°C for a day The catalytic powder is obtained by plasticizing the dried powder at 400°C for one hour.

Comparative Example 17 is an example of a catalyst for purifying exhaust gas wherein a promoter component is nickel oxide, a high heat-resistant oxide is zirconia-based solid solution, and a catalytic active species is an impregnation catalyst.

Nickel oxide suspension is obtained by adding 10.0g of nickel oxide into 200g of water and mixing it, and then adding 10.0g of polyvinylpyrrolidone thereto.

Separately, zirconia-ytrria precursor is obtained by adding 420.78g of nitric acid zirconyl (ZrO(NO₃)₂·2H₂O) and 4.66g of nitric acid yttrium (Y(NO₃)₃·6H₂O) into 2000g of water and mixing it, and then distilling while stirring until the 25% ammonia aqueous solution becomes pH 11. Subsequently, zirconia-yttrium precursor cake is obtained by filtering and washing sediment thereof with water. Such a cake, 2000g of water and the nickel oxide suspension previously produced are added and then stirred again.

Further, the catalytic powder is added thereto and then stirred again, wherein 100g of aluminum oxide and dinitrodiamine platinum are impregnated in the catalytic powder such that Pt becomes 3 wt%.

After being stirred, a supernatant is thrown away by calming. Then, moisture is evaporated by leaving the solution in a thermostat at 100°C for a day. The catalytic powder is obtained by plasticizing the dried powder at 400°C for one hour.

Comparative Example 18 is an example of a catalyst for purifying exhaust gas wherein a promoter component is cobalt oxide, a high heat-resistant oxide is zirconia-based solid solution, and a catalytic active species is an impregnation catalyst.

Cobalt oxide suspension is obtained by adding 10.0g of cobalt oxide into 200g of water and mixing it, and then adding 10.0g of polyvinylpyrrolidone thereto.

Separately, zirconia-ytrria precursor is obtained by adding 420.78g of nitric acid zirconyl (ZrO(NO₃)₂·2H₂O) and 4.66g of nitric acid yttrium (Y(NO₃)₃·6H₂O) into 2000g of water and mixing it, and then distilling while stirring until the 25% ammonia aqueous solution becomes pH 11. Subsequently, zirconia-yttrium precursor cake is obtained by filtering and washing sediment thereof with water. Such a cake, 2000g of water and the cobalt oxide suspension previously produced are added and then stirred again.

Further, the catalytic powder is added thereto and then stirred again, wherein 100g of aluminum oxide and dinitrodiamine platinum are impregnated in the catalytic powder such that Pt becomes 3 wt%.

After being stirred, a supernatant is thrown away by calming. Then, moisture is evaporated by leaving the solution in a thermostat at 100°C for a day The catalytic powder is obtained by plasticizing the dried powder at 400°C for one hour.

Comparative Example 19 is an example of a catalyst for purifying exhaust gas wherein a promoter component is cerium oxide, a high heat-resistant oxide is alumina, and a catalytic active species is an impregnation catalyst.

Cerium oxide suspension is obtained by adding 10.0g of cerium oxide into 200g of water and mixing it, and then adding 10.0g of polyvinylpyrroldone thereto.

Separately, 112.36g of hydration aluminum oxide is added into 2000g of water and mixed. Then, the cerium oxide suspension previously produced is added thereto and stirred again.

Further, the catalytic powder is added thereto and then stirred again, wherein 100g of aluminum oxide and dinitrodiamine platinum are impregnated in the catalytic powder such that Pt becomes 3 wt%.

After being stirred, a supernatant is thrown away by calming. Then, moisture is evaporated by leaving the solution in a thermostat at 100°C for a day The catalytic powder is obtained by plasticizing the dried powder at 400°C for one hour.

Comparative Example 20 is an example of a catalyst for purifying exhaust gas wherein a promoter component is cerium oxide-zirconium oxide solid solution, a high heat-resistant oxide for covering the promoter is alumina, and a catalytic active species is an impregnation catalyst.

Cerium oxide-zirconium oxide solid solution suspension is obtained by adding 10.0g of cerium oxide-zirconium oxide solid solution (mol ratio of Ce : Zr = 80 : 20) into 200g of water and mixing it, and then adding 10.0g of polyvinylpyrrolidone thereto.

Separately, 112.36g of hydration aluminum oxide is added into 2000g of water and mixed. Then, the cerium oxide-zirconium oxide solid solution suspension previously produced is added thereto and stirred again.

Further, the catalytic powder is added thereto and then stirred again, wherein 100g of aluminum oxide and dinitrodiamine platinum are impregnated in the catalytic powder such that Pt becomes 3 wt%.

After being stirred, a supernatant is thrown away by calming. Then, moisture is evaporated by leaving the solution in a thermostat at 100°C for a day. The catalytic powder is obtained by plasticizing the dried powder at 400°C for one hour.

Comparative Example 21 is an example of a catalyst for purifying exhaust gas wherein a promoter component is manganese oxide, a high heat-resistant oxide for covering the promoter is zirconia solid solution, and a catalytic active species is Pt clathrate catalyst.

Manganese oxide suspension is obtained by adding 10.0g of manganese oxide into 200g of water and mixing it, and then adding 10.0g of polyvinylpyrrolidone thereto.

Separately, zirconia-ytrria precursor is obtained by adding 420.78g of nitric acid zirconyl (ZrO(NO₃)₂·2H₂O) and 4.66g of nitric acid yttrium (Y(NO₃)₃·6H₂O) into 2000g of water and mixing it, and then distilling while stirring until the 25% ammonia aqueous solution becomes pH 11. Subsequently, zirconia-yttrium precursor cake is obtained by filtering and washing sediment thereof with water. Such a cake, 2000g of water and the manganese oxide suspension previously produced are added, and then stirred again.

200.27g of aluminum isopropoxide is added into 1792g of 2-methyl-2,4-pentanediol and then stirred and dissolved. After the dissolution, 75g of polyvinylpyrrolidone Pt (Pt : 4 wt%) is added thereto while being stirred. A dried powder is obtained by decompressing and drying the mixture.

A dried powder of precious metallic clathrate is added into the mixed solution of the manganese oxide suspension and the zirconia-yttria precursor previously produced, and then stirred again.
After being stirred, a supernatant is thrown away by calming. Then, moisture is evaporated by leaving the solution in a thermostat at 150°C for a day The catalytic powder is obtained by plasticizing the dried powder at 400°C for one hour.

Comparative Example 22 is an example of a catalyst for purifying exhaust gas wherein a promoter component is iron oxide, a high heat-resistant oxide for covering the promoter is zirconia solid solution, and a catalytic active species is Pt clathrate catalyst.

Iron oxide suspension is obtained by adding 10.0g of iron oxide into 200g of water and mixing it, and then adding 10.0g of polyvinylpyrrolidone thereto.

Separately, zirconia-ytrria precursor is obtained by adding 420.78g of nitric acid zirconyl (ZrO(NO₃)₂·2H₂O) and 4.66g of nitric acid yttrium (Y(NO₃)₃·6H₂O) into 2000g of water and mixing it, and then distilling while stirring until the 25% ammonia aqueous solution becomes pH 11. Subsequently, zirconia-yttrium precursor cake is obtained by filtering and washing sediment thereof with water. Such a cake, 2000g of water and the iron oxide suspension previously produced are added, and then stirred again.

200.27g of aluminum isopropoxide is added into 1792g of 2methyl-2,4-pentanediol, and then stirred and dissolved. After the dissolution, 75g of polyvinylpyrrolidone Pt (Pt : 4 wt%) is added thereto while being stirred. A dried powder is obtained by decompressing and drying the mixture.

A dried powder of the precious metallic clathrate is added into the mixed solution of the iron oxide suspension and the zirconia-yttria precursor previously produced, and then stirred again.

After being stirred, a supernatant is thrown away by calming. Then, moisture is evaporated by leaving the solution in a thermostat at 150°C for a day. The catalytic powder is obtained by plasticizing the dried powder at 400°C for one hour.

Comparative Example 23 is an example of a catalyst for purifying exhaust gas wherein a promoter component is nickel oxide, a high heat-resistant oxide for covering the promoter is zirconia solid solution, and a catalytic active species is Pt clathrate catalyst.

Nickel oxide suspension is obtained by adding 10.0g of nickel oxide into 200g of water and mixing it, and then adding 10.0g of polyvinylpyrrolidone thereto.

Separately, zirconia-ytrria precursor is obtained by adding 420.78g of nitric acid zirconyl (ZrO(NO₃)₂·2H₂O) and 4.66g of nitric acid yttrium (Y(NO₃)₃·6H₂O) into 2000g of water and mixing it, and then distilling while stirring until the 25% ammonia aqueous solution becomes pH 11. Subsequently, zirconia-yttrium precursor cake is obtained by filtering and washing sediment thereof with water. Such a cake, 2000g of water and the nickel oxide suspension previously produced are added, and then stirred again.

200.27g of aluminum isopropoxide is added into 1792g of 2methyl-2,4-pentanediol, and then stirred and dissolved. After the dissolution, 75g of polyvinylpyrrolidone Pt (Pt : 4 wt%) is added thereto while being stirred. A dried powder is obtained by decompressing and drying the mixture.

A dried powder of precious metallic clathrate is added into the mixed solution of the nickel oxide suspension and the zirconia-yttria precursor previously produced, and then stirred again.

After being stirred, a supernatant is thrown away by calming. Then, moisture is evaporated by leaving the solution in a thermostat at 150°C for a day. The catalytic powder is obtained by plasticizing the dried powder at 400°C for one hour.

Comparative Example 10 is an example of a catalyst for purifying exhaust gas, wherein a promoter component is cobalt oxide, a high heat-resistant oxide for covering the promoter is zirconia solid solution, and a catalytic active species is Pt clathrate catalyst.

Cobalt oxide suspension is obtained by adding 10.0g of cobalt oxide into 200g of water and mixing it, and then adding 10.0g of polyvinylpyrrolidone thereto.

Separately, zirconia-ytrria precursor is obtained by adding 420.78g of nitric acid zirconyl (ZrO(NO₃)₂·2H₂O) and 4.66g of nitric acid yttrium (Y(NO₃)₃·6H₂O) into 2000g of water and mixing it, and then distilling while stirring until the 25% ammonia aqueous solution becomes pH 11. Subsequently, zirconia-yttrium precursor cake is obtained by filtering and washing sediment thereof with water. Such a cake, 2000g of water and the cobalt oxide suspension previously produced are added, and then stirred again.

200.27g of aluminum isopropoxide is added into 1792g of 2methyl-2,4-pentanediol, and then stirred and dissolved. After the dissolution, 75g of polyvinylpyrrolidone Pt (Pt : 4 wt%) is added thereto while being stirred. A dried powder is obtained by decompressing and drying the mixture.

A dried powder of the precious metallic clathrate is added into the mixed solution of the cobalt oxide suspension and the zirconia-yttria precursor previously produced, and then stirred again.

After being stirred, a supernatant is thrown away by calming. Then, moisture is evaporated by leaving the solution in a thermostat at 150°C for a day. The catalytic powder is obtained by plasticizing the dried powder at 400°C for one hour.

Comparative Example 25 is an example of a catalyst for purifying exhaust gas wherein a promoter component is cerium oxide, a high heat-resistant oxide for covering the promoter is alumina, and a catalytic active species is Pt clathrate catalyst.

Cerium oxide suspension is obtained by adding 10.0g of cerium oxide into 200g of water and mixing it, and then adding 10.0g of polyvinylpyrrolidone thereto.

Separately, 112.36g of hydration aluminum oxide is added into 2000g of water and mixed. Then, the cerium oxide suspension previously produced is added thereto and stirred again.

200.27g of aluminum isopropoxide is added into 1792g of 2-methyl-2,4-pentanediol, and then stirred and dissolved. After the dissolution, 75g of polyvinylpyrrolidone Pt (Pt : 4 wt%) is added thereto while being stirred. A dried powder is obtained by decompressing and drying the mixture.

A dried powder of precious metallic clathrate is added into the mixed solution of the cerium oxide suspension and hydration aluminum oxide previously produced, and then stirred again.

After being stirred, a supernatant is thrown away by calming. Then, moisture is evaporated by leaving the solution in a thermostat at 150°C for a day The catalytic powder is obtained by plasticizing the dried powder at 400°C for one hour.

Comparative Example 26 is an example of a catalyst for purifying exhaust gas wherein a promoter component is cerium oxide-zirconium oxide solid solution, a high heat-resistant oxide for covering the promoter is alumina, and a catalytic active species Pt clathrate catalyst.

Cerium oxide-zirconium oxide solid solution suspension is obtained by adding 10.0g of the cerium oxide-zirconium oxide solid solution (mol ratio of Ce : Zr = 80 : 20) into 200g of water and mixing it, and then adding 10.0g of polyvinylpyrrolidone thereto.

Separately, 112.36g of hydration aluminum oxide is added into 2000g of water and mixed. Then, the cerium oxide-zirconium oxide solid solution suspension previously produced is added thereto and stirred again. 200.27g of aluminum isopropoxide is added into 1792g of 2-methyl-2,4-pentanediol and then stirred and dissolved. After the dissolution, 75g of polyvinylpyrrolidone Pt (Pt: 4 wt%) is added thereto while being stirred. A dried powder is obtained by decompressing and drying the mixture.

A dried powder of the precious metallic clathrate is added into the mixed solution of the cerium oxide-zirconium oxide suspension and the hydration aluminum oxide previously produced, and then stirred again.

After being stirred, a supernatant is thrown away by calming, and then moisture is evaporated by leaving the solution in a thermostat at 150°C for a day The catalytic powder is obtained by plasticizing the dried powder at 400°C for one hour.

Following is a brief description of the manufacture of the catalyst. Catalytic slurry is obtained by adding 50g of each catalytic powder in Embodiments 1 to 12 (including Embodiments 5, 6, 11 and 12 not falling under the scope of the present invention) and Comparative Examples 1 to 26 obtained from the above processes, 5g of boehmite and 157g of 10% nitric acid-containing aqueous solution into an alumina magnetic pot, and then shaking and crashing it with an alumina ball.

Further, the catalysts in Embodiments 1 to 12 (including Embodiments 5, 6, 11 and 12 not falling under the scope of the present invention) and Comparative Examples 1 to 26 are obtained by removing surplus slurry in the air current by adding such a catalytic slurry into 0.0595 L of a cordierite honeycomb substrate (400 cell/4 mils), and then drying it at 120°C and coating a catalytic powder to the honeycomb substrate by plasticizing again in the air current at 400°C.

The catalyst obtained by such a sample production is evaluated by the following methods.

First described in the catalyst durability test. For a V-type six cylinder engine by Nissan Motor Co., Ltd., a catalyst durability test is performed for 30 hours by setting a temperature at a catalyst entrance as 1000°C. Further, lead-free gasoline is used as a fuel.

A catalyst evaluation test is performed by cutting off a part of the catalyst bearing body, wherein the durability test was performed and setting a catalyst capacity as 40 ml. The test is performed under the conditions that a flow rate of a reaction gas is 40 L/min, a temperature of the reaction gas is raised from 200°C to 500°C by 10°C/min, and a composition of the reaction gas is as shown in Table 1 below. Further, the flow rate of the reaction gas is 40 L/min. A composition of an outlet gas is measured by a continuous analyzer and an exhaust gas inversion rate at each temperature is calculated from the obtained inlet and outlet gas concentrations. A temperature wherein an outlet gas concentration becomes a half of an inlet gas concentration, that is the inversion rate becomes 50%, is indicated as T50. A catalyst performance is evaluated by allowing a temperature of a 50% inversion rate of HC to be HC-T50.

**TABLE 1**

| NO | CO | H₂ | O₂ | CO₂ | HC | H₂O | N₂ |
|---|---|---|---|---|---|---|---|
| (ppm) | (%) | (%) | (%) | (%) | ppm C | (%) | |
| 1000 | 0.6 | 0.2 | 0.6 | 13.9 | 1665 | 10 | remaining portion |

Next described in the catalyst purification performance. Table 2 shows a 50 % purifying temperature of HC (HC-T50) of Embodiments 1 to 12 (including Embodiments 5, 6, 11 and 12 not falling under the scope of the present invention) and Comparative Examples 1 to 26.

As can be understood from Table 2, since sintering of the promoter is restrained in Embodiments 1 to 12 (including Embodiments 5, 6, 11 and 12 not falling under the scope of the present invention), the HC-T5 decreases, thereby improving the catalyst activity.

Since there is no promoter in Comparative Example 1, the HC-T50 is higher and the activity is lower than those of the Embodiments. Since the promoter is sintered by high temperature engine durability in Comparative Examples 2 to 7, the HC-T50 is higher and the activity is lower than those of the Embodiments.

From the above, it can be seen that deterioration of the promoter performance is restrained in the catalyst in accordance with the embodiments taught herein wherein the promoter is covered with the high heat-resistant oxide.

The above-described embodiments have been described in order to allow easy understanding of the invention and do not limit the invention. On the contrary, the invention is intended to cover various modifications and equivalent arrangements included within the scope of the appended claims, which scope is to be accorded the broadest interpretation so as to encompass all such modifications and equivalent structure as is permitted under the law.

This application claims priority from Japanese Patent Application No. 2006-274462, filed 5th October 2006.

**TABLE 2**

| In Table 2, Embodiments 5, 6, 11 and 12 do not fall under the scope of the present invention. | | | | | | | | | | | |
|---|---|---|---|---|---|---|---|---|---|---|---|
| Precious metallic component | HC-T50 [°C] | Precious metallic component | HC-T50 [°C] | Precious metallic component | HC-T50 [°C] | Precious metallic component | HC-T50 [°C] | Precious metallic component | HC-T50 [°C] | Precious metallic component | HC-T50 [°C] |
| Pt | | Pd | | Pt | | Pd | | Pt | | Pt | |
| Embodiment 1 | 388 | Embodiment 7 | 315 | Comparative Example 1 | 486 | Comparative Example 8 | 350 | Comparative Example 15 | 421 | Comparative Example 22 | 422 |
| Embodiment 2 | 391 | Embodiment 8 | 325 | Comparative Example 2 | 471 | Comparative Example 9 | 341 | Comparative Example 16 | 422 | Comparative Example 23 | 431 |
| Embodiment 3 | 402 | Embodiment 9 | 319 | Comparative Example 3 | 469 | Comparative Example 10 | 347 | Comparative Example 17 | 431 | Comparative Example 24 | 428 |
| Embodiment 4 | 391 | Embodiment 10 | 328 | Comparative Example 4 | 472 | Comparative Example 11 | 358 | Comparative Example 18 | 428 | Comparative Example 25 | 418 |
| Embodiment 5 | 375 | Embodiment 11 | 310 | Comparative Example 5 | 476 | Comparative Example 12 | 355 | Comparative Example 19 | 418 | Comparative Example 26 | 399 |
| Embodiment 6 | 370 | Embodiment 12 | 303 | Comparative Example 6 | 465 | Comparative Example 13 | 341 | Comparative Example 20 | 399 | | |
| | | | | Comparative Example 7 | 459 | Comparative Example 14 | 333 | Comparative Example 21 | 421 | | |

## Claims

1. A catalyst (30, 40) for purification of exhaust gas comprising:
a promoter compound (16) consisting of a promoter component particle (14) covered with a high heat-resistant oxide (15); and
a catalytic active species (36) adjacent to the promoter compound (16);
wherein the promoter component particle (14) is an oxide comprising at least one of Mn, Fe, Ni, Co, Cu and Zn; and
the high heat-resistant oxide (15) comprises ZrO₂ and one or more than one species of CeO₂, Y₂O₃, La₂O₃, CaO and Nd₂O₃; and
wherein the catalytic active species (36) comprises a first metallic oxide (32), catalytic active particles (31) born on the first metallic oxide (32) and a second porous metallic oxide (35); and
wherein the catalytic active particle (31) is caged within the second porous metallic oxide (35) so that the catalytic active particle (31) is restrained from being moved,
wherein the catalytic active particles (31) comprise at least one precious metal, wherein the precious metal comprises at least one of Pt, Pd, Rh, Au, Ag, Ir and Ru and
wherein the first metallic oxide (32) and the second porous metallic oxide (35) comprises at least one of Al₂O₃, CeO₂, ZrO₂, Y₂O₃, La₂O₃ and Nd₂O₃
or
wherein the promoter component particle (14) is an oxide comprising at least one of Mn, Fe, Ni, Co, Cu and Zn; and
the high heat-resistant oxide (15) comprises ZrO₂ and one or more than one species of CeO₂, Y₂O₃, La₂O₃, CaO and Nd₂O₃; and
wherein the catalytic active species (46) comprises a composite oxide particle (41) and a porous metallic oxide (45), wherein the composite oxide particle (41) is caged within the porous metallic oxide (45) so that the composite oxide particle (41) is restrained from being moved;
wherein the composite oxide particle (41) comprises at least one precious metal and at least one rare-earth element;
wherein the precious metal comprises at least one of Pt, Pd, Rh, Au, Ag, Ir and Ru,
wherein the rare-earth element comprises at least one of La, Ce, Pr, Nd and Sm and
wherein the metallic oxide (45) comprises at least one of Al₂O₃, CeO₂, ZrO₂, Y₂O₃, La₂O₃ and Nd₂O₃.

2. A catalyst (30, 40) as claimed in claim 1, wherein the high heat-resistant oxide (15) comprises at least one of CeO₂, Y₂O₃, La₂O₃ and Nd₂O₃.

3. A catalyst (30, 40) as claimed in any preceding claim, wherein:
the promoter component particle (14) comprises at least one of Mn, Fe, Ni and Co oxides; and the high heat-resistant oxide (15) comprises ZrO₂-Y₂O₃.

## Patentansprüche

1. Katalysator (30, 40) zur Reinigung von Abgas, umfassend:
eine Promotorverbindung (16), die aus einem Promotorkomponentenpartikel (14) besteht, das mit einem hochhitzebeständigen Oxid (15) bedeckt ist; und
eine katalytisch aktive Spezies (36) benachbart zur Promotorverbindung (16);
wobei das Promotorkomponentenpartikel (14) ein Oxid ist, das mindestens eines von Mn, Fe, Ni, Co, Cu und Zn aufweist; und
das hochhitzebeständige Oxid (15) ZrO₂ und eine oder mehrere Spezies von CeO₂, Y₂O₃, La₂O₃, CaO und Nd₂O₃ aufweist; und
wobei die katalytisch aktive Spezies (36) ein erstes Metalloxid (32), katalytisch aktive Partikel (31), die auf dem ersten Metalloxid (32) getragen sind, und ein zweites poröses Metalloxid (35) aufweist; und
wobei das katalytisch aktive Partikel (31) innerhalb des zweiten porösen Metalloxids (35) so eingesperrt ist, dass das katalytisch aktive Partikel (31) daran gehindert ist, bewegt zu werden,
wobei die katalytisch aktiven Partikel (31) mindestens ein Edelmetall aufweisen, wobei das Edelmetall mindestens eines von Pt, Pd, Rh, Au, Ag, Ir und Ru und aufweist und
wobei das erste Metalloxid (32) und das zweite poröse Metalloxid (35) mindestens eines von Al₂O₃, CeO₂, ZrO₂, Y₂O₃, La₂O₃ und Nd₂O₃ aufweisen
oder
wobei das Promotorkomponentenpartikel (14) ein Oxid ist, das mindestens eines von Mn, Fe, Ni, Co, Cu und Zn aufweist; und
das hochhitzebeständige Oxid (15) ZrO₂ und eine oder mehrere Spezies von CeO₂, Y₂O₃, La₂O₃, CaO und Nd₂O₃ aufweist; und
wobei die katalytisch aktive Spezies (46) ein Verbundoxidpartikel (41) und ein poröses Metalloxid (45) aufweist, wobei das Verbundoxidpartikel (41) in dem porösen Metalloxid (45) so eingesperrt ist, dass das Verbundoxidpartikel (45) 41) daran gehindert ist, bewegt zu werden;
wobei das Verbundoxidpartikel (41) mindestens ein Edelmetall und mindestens ein Seltenerdelement aufweist;
wobei das Edelmetall mindestens eines von Pt, Pd, Rh, Au, Ag, Ir und Ru aufweist,
wobei das Seltenerdelement mindestens eines von La, Ce, Pr, Nd und Sm aufweist und
wobei das Metalloxid (45) mindestens eines von Al₂O₃, CeO₂, ZrO₂, Y₂O₃, La₂O₃ und Nd₂O₃ aufweist.

2. Katalysator (30, 40) nach Anspruch 1, wobei das hochhitzebeständige Oxid (15) mindestens eines von CeO₂, Y₂O₃, La₂O₃ und Nd₂O₃ aufweist.

3. Katalysator (30, 40) nach einem der vorhergehenden Ansprüche, wobei:
das Promotorkomponentenpartikel (14) mindestens eines von Mn-, Fe-, Ni- und Co-Oxiden aufweist; und das hochhitzebeständige Oxid (15) ZrO₂-Y₂O₃ aufweist.

## Revendications

1. Catalyseur (30, 40) pour la purification des gaz d'échappement, comprenant :
un composé promoteur (16) constitué d'une particule de composant promoteur (14) recouverte d'un oxyde hautement résistant à la chaleur (15) ; et
une espèce catalytique active (36) adjacente au composé promoteur (16) ;
dans lequel la particule de composant promoteur (14) est un oxyde comprenant au moins l'un de Mn, Fe, Ni, Co, Cu et Zn ; et
l'oxyde hautement résistant à la chaleur (15) comprend du ZrO₂ et une ou plusieurs espèce(s) de CeO₂, Y₂O₃, La₂O₃, CaO et Nd₂O₃ ; et
dans lequel l'espèce catalytique active (36) comprend un premier oxyde métallique (32), des particules catalytiques actives (31) supportées sur le premier oxyde métallique (32) et un deuxième oxyde métallique poreux (35) ; et
dans lequel la particule catalytique active (31) est enfermée dans le deuxième oxyde métallique poreux (35) de sorte que la particule catalytique active (31) soit empêchée d'être déplacée,
dans lequel les particules catalytiques actives (31) comprennent au moins un métal précieux,
dans lequel le métal précieux comprend au moins l'un de Pt, Pd, Rh, Au, Ag, Ir et Ru et
dans lequel le premier oxyde métallique (32) et le deuxième oxyde métallique poreux (35) comprennent au moins l'un de Al₂O₃, CeO₂, ZrO₂, Y₂O₃, La₂O₃ et Nd₂O₃
ou
dans lequel la particule de composant promoteur (14) est un oxyde comprenant au moins l'un de Mn, Fe, Ni, Co, Cu et Zn ; et
l'oxyde hautement résistant à la chaleur (15) comprend du ZrO₂ et une ou plusieurs espèce(s) de CeO₂, Y₂O₃, La₂O₃, CaO et Nd₂O₃ ; et
dans lequel l'espèce catalytique active (46) comprend une particule d'oxyde composite (41) et un oxyde métallique poreux (45), où la particule d'oxyde composite (41) est enfermée dans l'oxyde métallique poreux (45) de sorte que la particule d'oxyde composite (41) soit empêchée d'être déplacée ;
dans lequel la particule d'oxyde composite (41) comprend au moins un métal précieux et au moins un élément de terres rares ;
dans lequel le métal précieux comprend au moins l'un de Pt, Pd, Rh, Au, Ag, Ir et Ru,
dans lequel l'élément de terres rares comprend au moins l'un de La, Ce, Pr, Nd et Sm et
dans lequel l'oxyde métallique (45) comprend au moins l'un de Al₂O₃, CeO₂, ZrO₂, Y₂O₃, La₂O₃ et Nd₂O₃.

2. Catalyseur (30, 40) tel que revendiqué dans la revendication 1, dans lequel l'oxyde hautement résistant à la chaleur (15) comprend au moins l'un de CeO₂, Y₂O₃, La₂O₃ et Nd₂O₃.

3. Catalyseur (30, 40) tel que revendiqué dans l'une des revendications précédentes, dans lequel :
la particule de composant promoteur (14) comprend au moins l'un des oxydes de Mn, Fe, Ni et Co ; et l'oxyde hautement résistant à la chaleur (15) comprend du ZrO₂-Y₂O₃.
